# FASCICULE DE BREVET EUROPEEN

(11) **EP 0 603 947 B1**
(45) Date de publication et mention de la délivrance du brevet: **12.04.2000**
(21) Numéro de dépôt: 93203539.7
(22) Date de dépôt: 15.12.1993
(51) Int. Cl.: H04N 7/30

(54) **Dispositif de codage de signaux numériques représentatifs d'images de télévision**
Vorrichtung zur Kodierung von digitalen Fernbildsignalen
Coding apparatus for digital television image signals

(30) Priorité: 22.12.1992 FR 9215504
(43) Date de publication de la demande: 29.06.1994
(73) Titulaire: Koninklijke Philips Electronics N.V., 5621 BA Eindhoven (NL)
(72) Inventeur: Guede, Frédérique, F-75008 Paris (FR)
(74) Mandataire: Landousy, Christian

(56) Documents cités:
- EP-A- 0 451 545
- EP-A- 0 490 799
- EP-A- 0 508 351
- EP-A- 0 510 972
- WO-A-87/02854

## Description

La présente invention concerne un dispositif de codage de signaux numériques correspondant à des images à trames entrelacées, comprenant d'une part une première voie de codage à longueur variable, comprenant elle-même en série un premier tronçon dit de compression de données entrelacées et un tronçon de codage, et, en parallèle sur celle-ci, une deuxième voie de codage à longueur variable, comprenant elle-même en série un deuxième tronçon de compression de données non entrelacées et un tronçon de codage, et d'autre part une première voie de prédiction à partir des signaux de sortie dudit premier tronçon et, en parallèle sur celle-ci, une deuxième voie de prédiction à partir des signaux de sortie dudit deuxième tronçon, ledit deuxième tronçon incluant en tête un circuit de suppression d'entrelacement des trames et ladite deuxième voie de prédiction incluant un circuit de rétablissement d'entrelacement des trames. Cette invention est applicable notamment au codage de signaux de télévision selon le standard MPEG1 (le sigle MPEG, correspondant à l'expression anglaise "Moving Picture Expert Group", désigne dans l'Organisation Internationale de Normalisation le groupe de travail qui traite le problème de codage des séquences d'images animées).

Les spécifications de la norme MPEG1 prévoient que les images traitées sont nécessairement sous forme séquentielle. Si les images d'origine sont des images de télévision, c'est-à-dire à deux trames entrelacées, ces deux trames, considérées pour le codage de type MPEG comme des informations prélevées au même instant, n'en correspondent pas moins, cependant, à des données qui, dans la réalité, sont distantes de l'intervalle inter-trames de 20 millisecondes. Dans des séquences d'images où le mouvement est très rapide, un mouvement inter-trames aussi important conduit à des défauts d'image tels que l'effet de peigne, dûs à l'apparition de fréquences parasites dans les blocs.

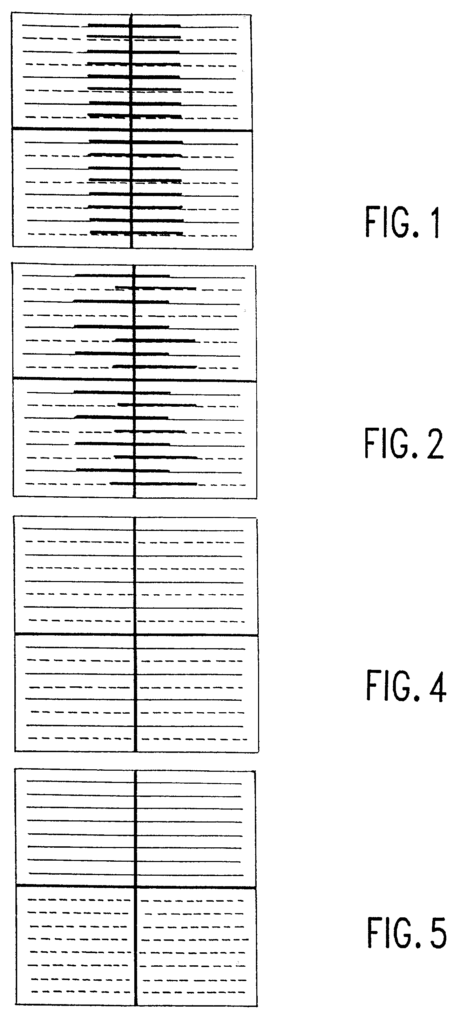

Selon le standard MPEG1, chaque image est découpée en macroblocs de 16 x 16 éléments d'image, ou pixels, comprenant eux-mêmes, pour la luminance, quatre blocs de 8 x 8 pixels et, pour la chrominance, deux blocs de 8 x 8 pixels. La figure 1 montre, dans un tel macrobloc, une structure verticale dont l'alignement est bien conservé en l'absence de mouvement, même si les lignes de ce macrobloc correspondent alternativement à l'une et à l'autre de deux trames entrelacées distantes de 20 millisecondes. La figure 2 montre la même structure verticale dans le cas où le mouvement inter-trames est important et où apparaît l'effet de peigne, dû au décalage dans le temps des informations des lignes impaires et de celles des lignes paires du macrobloc.

Le brevet US-A-5091782 décrit un dispositif de codage de signaux vidéo numériques dans lequel les deux trames entrelacées sont, avant codage, traitées de deux façons distinctes. D'une part les trames entrelacées sont séparées puis subdivisées en blocs soumis ensuite chacun à une transformation orthogonale suivie d'une quantification, et d'autre part les blocs ainsi obtenus et qui sont en correspondance spatiale dans les deux trames sont réentrelacés pour subir, de même, une transformation orthogonale et une quantification. Sur les deux séquences distinctes de signaux ainsi quantifiés, des calculs d'erreur par rapport aux signaux avant quantification sont alors respectivement effectués pour permettre, selon le mouvement contenu dans ces signaux d'origine, la sélection définitive de l'une desdites deux séquences de signaux quantifiés à coder, à savoir celle à laquelle est associée l'erreur la plus faible.

EP-A-0 451 545 décrit un dispositif de codage de signaux numériques correspondant à des images à trames entrelacées, ce dispositif comprenant: une première voie de codage à longueur variable comprenant un premier tronçon de compression de données de lignes entrelacées et un tronçon de codage, une deuxième voie de codage à longueur variable comprenant un deuxième tronçon de compression de données de lignes non entrelacées et un tronçon de codage, le deuxième tronçon incluant en tête un circuit de suppression d'entrelacement des trames, une première voie de prédiction à partir du premier tronçon, une deuxième voie de prédiction à partir du deuxième tronçon, ladite deuxième voie de prédiction incluant un circuit de rétablissement d'entrelacement des trames, et un moyen de comparaison des signaux de sortie du premier tronçon et du deuxième tronçon et de sélection de voie de compression et codage selon le résultat de ladite comparaison.

Le but de l'invention est de proposer un dispositif de codage faisant appel, pour opérer une compression de données plus efficace tenant davantage compte de la plus ou moins grande importance du mouvement dans les images, à un autre type de solution technique.

A cet effet, l'invention concerne un dispositif de codage tel que défini dans le préambule de la description et qui est en outre caractérisé en ce qu'il comprend également un sous-ensemble de décision après codage, comprenant lui-même des moyens de comparaison des nombres de bits respectifs des signaux de sortie des première et deuxième voies de codage et de sélection des voies de codage et de prédiction selon le résultat de ladite comparaison.

La structure ainsi proposée a pour avantage particulier une plus grande simplicité de mise en oeuvre, en ce sens qu'elle repose seulement sur une comparaison du nombre de bits après codage et une décision qui, étant effectuée a posteriori, permet de supprimer tout calcul préalable d'erreurs et la comparaison de ces erreurs qui ne sont, évidemment, que des estimations a priori.

Les particularités et avantages de l'invention apparaîtront maintenant de façon plus détaillée dans la description qui suit et dans les dessins annexés, donnés à titre d'exemples non limitatifs et dans lesquels :
- les figures 1 et 2 illustrent l'apparition du défaut dit "structure en peigne" dans une partie d'image qui est ici un sous-ensemble formé de quatre blocs de luminance, lors de mouvements importants dans les images :
- la figure 3 montre un exemple de réalisation d'un dispositif de codage selon l'invention ;
- les figures 4 et 5 montrent un même ensemble de quatre blocs d'image, tel que disponible avant codage respectivement dans la première et dans la deuxième voie de codage ;
- la figure 6 montre un exemple de réalisation d'un dispositif de décodage apte à traiter des signaux codés tels que ceux délivrés par le dispositif de codage selon l'invention.

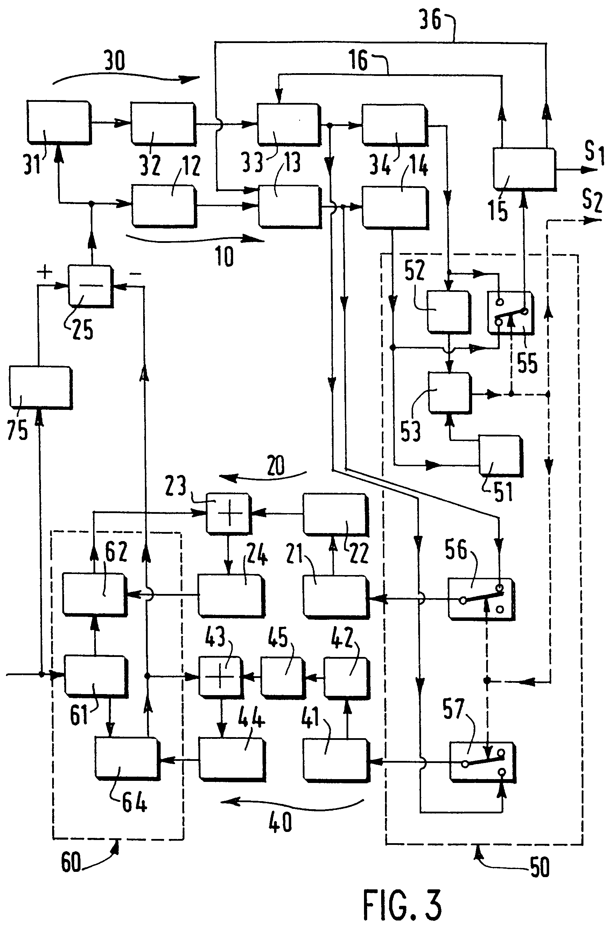

Le dispositif de codage représenté sur la figure 3 comprend une première voie de codage à longueur variable 10 recevant les signaux numériques à coder et comprenant elle-même en série un premier tronçon dit de compression de données entrelacées et un tronçon de codage. A cette première voie de codage 10 est associée une première voie de prédiction 20 à partir des signaux disponibles avant codage, c'est-à-dire des signaux de sortie dudit premier tronçon. La voie de codage 10 comprend ici en série un circuit 12 de transformation orthogonale (dans cet exemple, une transformation cosinus discrète), un circuit 13 de quantification, un circuit 14 de codage à longueur variable, et une mémoire-tampon 15 (dont la sortie S₁ constitue celle du dispositif de codage), ainsi qu'une connexion de retour 16 de cette mémoire-tampon vers le circuit 13, pour l'ajustement du pas de quantification et donc du débit. La voie de prédiction 20 prélève les signaux avant codage et comprend ici en série, en sortie du circuit 13, tout d'abord un circuit 21 de quantification inverse et un circuit 22 de transformation orthogonale inverse (ici une transformation cosinus discrète inverse), assurant respectivement les transformations inverses de celles exécutées par les circuits 13 et 12. Les signaux de sortie du circuit 22 sont alors envoyés vers une première entrée d'un additionneur 23, dont la sortie est stockée dans une mémoire d'image 24.

La sortie de la mémoire 24 est envoyée vers un étage de compensation de mouvement 60 qui comprend un circuit d'estimation de mouvement 61 et un circuit de compensation de mouvement 62. Le circuit 62 reçoit, sur une première entrée, la sortie de la mémoire 24 et, sur une deuxième entrée, celle du circuit 61. Le circuit 61 reçoit les signaux numériques d'entrée du dispositif de codage et détermine ici, pour chaque bloc d'image, un vecteur de déplacement représentatif de son mouvement par rapport au bloc correspondant d'une image précédemment envoyée pour codage (cette détermination est connue sous le nom de reconnaissance bloc à bloc, ou "block matching" en anglais). C'est le vecteur ainsi déterminé qui est envoyé vers la deuxième entrée du circuit de compensation de mouvement 62. Ces vecteurs de déplacement seront également fournis au dispositif de décodage décrit plus loin.

Le circuit 62 délivre un bloc prédit dont la différence avec le bloc précédent est déterminée dans un soustracteur 25 placé en amont du circuit de transformation orthogonale 12. Le bloc prédit est également renvoyé vers une deuxième entrée de l'additionneur 23. Le soustracteur 25 reçoit sur une première entrée la sortie d'un circuit 75 de conversion de format qui, lui-même, reçoit les signaux numériques d'entrée du dispositif, correspondant à des images, pour les présenter, à sa sortie, par blocs. Les signaux numériques présents sur l'entrée du circuit 12 sont donc des signaux représentant l'erreur de prédiction, c'est-à-dire la différence entre chaque bloc d'image d'origine et le bloc prédit qui en est déduit après les opérations effectuées dans la voie de prédiction 20 allant de l'entrée du circuit de quantification inverse 21 à la sortie du circuit de compensation de mouvement 62.

Le dispositif de la figure 3 comprend également une deuxième voie de codage à longueur variable 30 recevant également les signaux numériques à coder et comprenant elle-même en série un deuxième tronçon de compression de données non entrelacées et un tronçon de codage. A cette deuxième voie de codage 30 est associée une deuxième voie de prédiction 40 à partir des signaux de sortie dudit deuxième tronçon. Le dispositif comprend enfin un sous-ensemble de décision 50. La deuxième voie de codage 30, prévue en parallèle de la première, comprend en série, en sortie du soustracteur 25, un circuit 31 de suppression d'entrelacement des trames, un deuxième circuit 32 de transformation orthogonale, un deuxième circuit 33 de quantification, et un deuxième circuit 34 de codage à longueur variable. La voie 30 inclut aussi la mémoire-tampon 15, ainsi qu'une deuxième connexion de retour 36 reliant cette fois la mémoire-tampon 15 au circuit 33, comme précédemment pour ajustement du pas de quantification et du débit. La deuxième voie de prédiction 40 associée à cette voie 30 comprend en série, de façon similaire à la première, un deuxième circuit 41 de quantification inverse, un deuxième circuit 42 de transformation orthogonale inverse, un deuxième additionneur 43, une deuxième mémoire d'image 44 et, dans l'étage de compensation de mouvement 60, un deuxième circuit de compensation de mouvement 64. La voie 40 comprend aussi, en série entre les circuits 42 et 43, un circuit 45 de rétablissement de l'entrelacement des trames. La sortie de la voie 40, c'est-à-dire celle du circuit 64, est reliée à celle de la première voie de prédiction 20 (c'est-à-dire celle du circuit 62), pour être envoyées en commun vers l'entrée négative du soustracteur 25. Les deuxièmes circuits 32, 33, 34, 41, 42, 43, 44, 64 sont identiques aux premiers circuits 12, 13, 14, 21, 22, 23, 24, 62 respectivement.

Le sous-ensemble de décision 50 comprend, lui, d'une part un étage de comparaison et d'autre part un étage de sélection. L'étage de comparaison comprend un premier compteur 51 du nombre de bits en sortie du circuit de codage 14, un deuxième compteur 52 du nombre de bits en sortie du circuit de codage 34, et un comparateur 53 de ces deux nombres. L'étage de sélection, commandé par la sortie du comparateur 53, comprend d'une part un premier commutateur 55, dont les bornes non communes sont reliées respectivement aux sorties des deux circuits de codage 14 et 34 et dont la borne commune est reliée à l'entrée de la mémoire-tampon 15 pour envoyer la sortie de l'un de ces circuits 14 et 24 vers ladite mémoire-tampon, et d'autre part, des premier et deuxième interrupteurs 56 et 57, prévus pour assurer, ou non, la connexion de chaque voie de prédiction en sortie du circuit de quantification de la voie de codage associée. Un signal S₂ (constitué ici d'un seul bit) est délivré par le sous-ensemble de décision 50 pour être fourni, après transmission, au dispositif de décodage décrit ci-après et lui indiquer s'il y a eu désentrelacement ou non des lignes du macrobloc considéré.

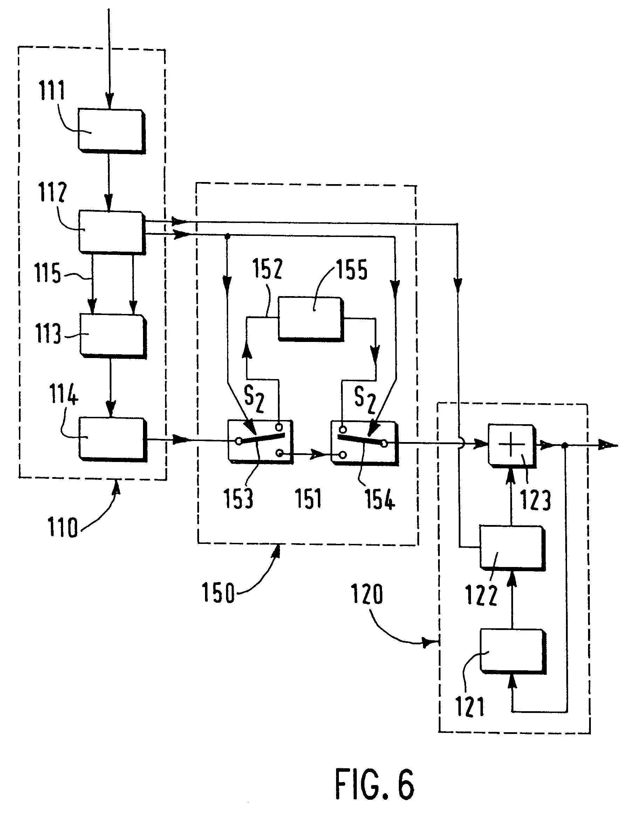

Le fonctionnement de ce dispositif de la figure 3 est le suivant. On sait que les signaux numériques d'entrée du dispositif correspondent ici, à l'origine, à des images de télévision organisées en deux trames entrelacées, mais pour lesquelles cet entrelacement initial a été converti, macrobloc par macrobloc, en une disposition séquentielle. Le dispositif selon l'invention, décrit ci-dessus, utilise un critère déterminé, ici l'évaluation a posteriori du nombre de bits issus du codage, avec et sans entrelacement des lignes de chaque macrobloc ainsi obtenu (c'est-à-dire ayant cette disposition séquentielle), pour choisir d' effectuer le codage et la prédiction sur des signaux restant disposés comme indiqué sur la figure 4, où les lignes du macrobloc correspondent aux trames entrelacées d'origine, ou bien au contraire sur des signaux désentrelacés comme indiqué sur la figure 5, où les huit lignes provenant de la trame impaire sont par exemple placées dans la partie supérieure du macrobloc et les huit lignes provenant de la trame paire dans la partie inférieure de celui-ci. Dans ce dernier cas, le fait que le macrobloc soit préalablement désentrelacé permet d'exécuter la transformation orthogonale, puis la quantification et le codage sur la base de blocs cohérents. La référence à la figure 2 fait comprendre, à l'évidence, comment cette cohérence est rétablie si, dans la structure verticale représentée sur cette figure 2, les informations situées les plus à gauche (ligne extraites d'une trame impaire) et les informations situées les plus à droite (lignes extraites de la trame paire correspondante) sont désormais, après suppression de l'entrelacement du macrobloc, regroupées dans les parties respectivement supérieure et inférieure de ce macrobloc.

Lorsque des signaux numériques correspondant initialement à des images de télévision entrelacées ont été traités, comme on vient de le décrire, dans un dispositif de codage tel que celui de la figure 3, les signaux ainsi codés peuvent être décodés par exemple dans un dispositif de décodage tel que celui représenté sur la figure 6. Ce dispositif de décodage comprend d'une part une voie de décodage 110 et un sous-ensemble de prédiction 120, et d'autre part, entre cette voie de décodage et ledit sous-ensemble de prédiction, un deuxième sous-ensemble de décision 150.

La voie de décodage 110 comprend, en série, une mémoire-tampon 111, un circuit 112 de décodage à longueur variable, un circuit 113 de quantification inverse, un circuit 114 de transformation orthogonale inverse (ici une transformation cosinus discrète inverse), ainsi qu'une connexion complémentaire 115 entre les circuits 112 et 113, destinée à fournir au circuit de quantification inverse la valeur du pas de quantification, disponible dans l'ensemble des signaux codés provenant du dispositif de codage.

Le sous-ensemble de prédiction 120 comprend en série une mémoire d'image 121 prélevant la sortie du dispositif de décodage, un circuit de prédiction 122 à partir d'une part du contenu de la mémoire d'image 121 et d'autre part de chaque vecteur de déplacement également fourni par le circuit 112 de décodage à longueur variable (les vecteurs de déplacement ont également été transmis dans ledit ensemble des signaux codés), et un additionneur 123 recevant sur sa première entrée la sortie de la voie de décodage 110, par l'intermédiaire du deuxième sous-ensemble de décision 150, et, sur sa deuxième entrée, la sortie dudit circuit de prédiction 122. La sortie de cet additionneur 123 constitue la sortie du dispositif de décodage.

Le deuxième sous-ensemble de décision 150 comprend deux voies en parallèle 151 et 152, prévues entre les bornes non communes respectives de deux commutateurs 153 et 154. La borne commune du commutateur 153 reçoit la sortie de la voie de décodage 110 (c'est-à-dire celle du circuit de transformation orthogonale inverse 114), tandis que la borne commune du commutateur 154 constitue la première entrée de l'additionneur 123. La voie 151 est une voie de transmission directe de la sortie de la voie de décodage 110 vers l'additionneur 123, tandis que la voie 151 assure cette même transmission mais par l'intermédiaire d'un circuit 155 de rétablissement de l'entrelacement des trames des images. Les commutateurs 153 et 154 sont commandés en synchronisme par le signal S₂ émis, dans le dispositif de codage, par le premier sous-ensemble de décision 50 et qui indique s'il y a eu ou non, dans la partie codage, désentrelacement des lignes impaires et paires du macrobloc considéré.

## Revendications

1. Dispositif de codage de signaux numériques correspondant à des images à trames entrelacées, comprenant d'une part une première voie de codage à longueur variable, comprenant elle-même en série un premier tronçon dit de compression de données entrelacées et un tronçon de codage, et, en parallèle sur celle-ci, une deuxième voie de codage à longueur variable, comprenant elle-même en série un deuxième tronçon de compression de données non entrelacées et un tronçon de codage, et d'autre part une première voie de prédiction à partir des signaux de sortie dudit premier tronçon et, en parallèle sur celle-ci, une deuxième voie de prédiction à partir des signaux de sortie dudit deuxième tronçon, ledit deuxième tronçon incluant en tête un circuit de suppression d'entrelacement des trames et ladite deuxième voie de prédiction incluant un circuit de rétablissement d'entrelacement des trames, caractérisé en ce qu'il comprend également un sous-ensemble (50) de décision après codage, comprenant lui-même des moyens de comparaison des nombres de bits respectifs des signaux de sortie des première et deuxième voies de codage et de sélection des voies de codage et de prédiction selon le résultat de ladite comparaison.

2. Dispositif de codage selon la revendication 1, dans lequel la première voie de codage à longueur variable est composée en série d'un premier circuit de transformation orthogonale et d'un premier circuit de quantification, ainsi que d'un premier circuit de codage à longueur variable, d'une mémoire-tampon, et d'une connexion de retour renvoyée de ladite mémoire vers le circuit de quantification, la première voie de prédiction est composée en série, en sortie dudit circuit de quantification, d'un circuit de quantification inverse, d'un circuit de transformation orthogonale inverse, d'un additionneur, d'une mémoire d'image et d'un circuit de compensation de mouvement dont la sortie constitue aussi la deuxième entrée dudit additionneur, la deuxième voie de codage à longueur variable est composée, en série, du circuit de suppression d'entrelacement, d'un deuxième circuit de transformation orthogonale et d'un deuxième circuit de quantification, ainsi que d'un deuxième circuit de codage à longueur variable, de la mémoire-tampon, et d'une connexion de retour renvoyée de ladite mémoire vers le deuxième circuit de quantification, et la deuxième voie de prédiction est composée, en série, d'un deuxième circuit de quantification inverse, d'un deuxième circuit de transformation orthogonale inverse, du circuit de rétablissement d'entrelacement des trames, d'un deuxième additionneur, d'une deuxième mémoire d'image, et d'un deuxième circuit de compensation de mouvement dont la sortie constitue aussi la deuxième entrée dudit deuxième additionneur, la sortie de ladite deuxième voie de prédiction étant reliée à celle de la première voie de prédiction pour être envoyées en commun vers l'entrée négative d'un soustracteur présent en tête des deux voies de codage, caractérisé en ce que le sous-ensemble de décision comprend un étage de comparaison des nombres de bits issus du codage respectivement dans les première et deuxième voies de codage, et un étage de sélection des voies de codage et de prédiction correspondant au nombre le plus faible, ledit étage de comparaison comprenant des compteurs du nombre de bits en sortie des circuits de codage et un comparateur de ces deux nombres de bits, et ledit étage de sélection comprenant un commutateur, pour la sélection de la voie de codage correspondant à celui des deux nombres de bits qui est le plus faible, et deux interrupteurs, pour la sélection de la voie de prédiction correspondant à la voie de codage ainsi sélectionnée.

## Claims

1. A device for encoding digital signals corresponding to interlaced-field pictures, comprising a first variable-length encoding channel, which channel comprises a series arrangement of a first section for compressing interlaced data and an encoding section, and, in parallel therewith, a second variable-length encoding channel, which channel comprises a series arrangement of a second section for compressing non-interlaced data and an encoding section, and a first channel for prediction on the basis of output signals of said first section and, in parallel therewith, a second channel for prediction on the basis of output signals of said second section, said second section including at its input side a circuit for de-interlacing the fields and said second prediction channel including a circuit for re-interlacing the fields, characterized in that it also comprises a sub-assembly (50) for decision after encoding, comprising means for comparing the respective numbers of bits of the output signals of the first and second encoding channels, and means for selecting the prediction and encoding channels in accordance with the result of said comparison.

2. An encoding device as claimed in claim 1, in which the first variable-length encoding channel comprises a series arrangement of a first orthogonal transform circuit and a first quantizing circuit, as well as a first variable-length encoding circuit, a buffer memory and a return connection between said memory and the quantizing circuit, in which the first prediction channel comprises, at the output of said quantizing circuit, a series arrangement of an inverse quantizing circuit, an inverse orthogonal transform circuit, an adder, a picture memory and a motion compensation circuit whose output also constitutes the second input of said adder, while the second variable-length encoding channel comprises a series arrangement of the circuit for suppressing the interlacing, a second orthogonal transform circuit and a second quantizing circuit, as well as a second variable-length encoding circuit, the buffer memory and a return connection between said memory and the second quantizing circuit, and the second prediction channel comprises a series arrangement of a second inverse quantizing circuit, a second inverse orthogonal transform circuit, the circuit for re-interlacing the fields, a second adder, a second picture memory and a second motion compensation circuit whose output also constitutes the second input of said second adder, the output of said second prediction channel being connected to that of the first prediction channel so as to be applied in common to the negative input of a subtracter arranged at the input side of the two encoding channels, characterized in that the decision sub-assembly comprises a stage for comparing the numbers of bits provided by coding in the first and second encoding channels, and a stage for selecting the prediction and encoding channels corresponding to the lowest number, said comparison stage comprising counters for counting the number of bits at the output of the encoding circuits and a comparator for comparing these two numbers of bits, and said selection stage comprising a switch for selecting the encoding channel corresponding to that having the lowest of the two numbers of bits, and two switches for selecting the prediction channel corresponding to the encoding channel thus selected.

## Patentansprüche

1. Kodiervorrichtung von Digitalen Signalen entsprechend Bildern mit verflochtenen Zwischenzeilen, versehen einerseits mit einem ersten Kodierweg variabler Länge, in Serie selbst versehen mit einem ersten sogenannten Abschnitt zur Komprimierung der Verflechtungsdaten und einem Abschnitt zur Kodierung, und parallel dazu einem zweiten Kodierweg variabler Länge, in Serie selbst versehen mit einem zweiten Abschnitt zur Komprimierung der Nicht-Verflechtungsdaten und einem Abschnitt zur Kodierung, und andererseits mit einem ersten Vorbestimmungsweg ausgehend von den Ausgangssignalen des besagten ersten Abschnitts und, parallel auf diesem, einem zweiten Vorbestimmungsweg ausgehend von den Ausgangssignalen des besagten zweiten Abschnitts, wobei der besagte zweite Abschnitt am Kopf eine Schaltung zur Aufhebung der Verflechtung der Zwischenzeilen und der besagte zweite Vorbestimmungsweg eine Schaltung zur Wiederherstellung der Verflechtung der Zwischenzeilen enthält, dadurch gekennzeichnet, daß sie zusätzlich ein Unter-Ensemble (50) zur Entscheidung enthält, selbst versehen mit Mitteln zum Vergleich nach der Kodierung der jeweiligen Anzahl Bits der Ausgangssignale der ersten und zweiten Kodierwege und zur Auswahl der Kodierwege und der Vorbestimmung je nach dem Ergebnis des besagten Vergleichs.

2. Kodiervorrichtung nach Anspruch 1, in der ein erster Kodierweg variabler Länge in Serie aus einer ersten orthogonalen Transformationsschaltung und einer ersten Quantifikationsschaltung sowie einer ersten Kodierschaltung variabler Länge, einem Pufferspeicher und einer Rückverbindung besteht, von dem besagten Speicher zur Quantifikationsschaltung zurückgeleitet, wobei der erste Vorbestimmungsweg in Serie am Ausgang der besagten Quantifikationsschaltung aus einer umgekehrten Quantifikationsschaltung, einer umgekehrten orthogonalen Transformationsschaltung, einem Addierer, einem Bildspeicher und einer Bewegungsausgleichsschaltung besteht, deren Ausgang ebenfalls den zweiten Eingang des besagten Addierers bildet, wobei der zweite Kodierweg variabler Länger in Serie aus einer Schaltung zur Aufhebung der Verflechtung, einer zweiten orthogonalen Transformationsschaltung und einer zweiten Quantifikationsschaltung sowie einer zweiten Kodierschaltung variabler Länge, dem Pufferspeicher und einer Rückverbindung zur Rückleitung von dem besagten Speicher zur zweiten Quantifikationsschaltung besteht, und der zweite Vorbestimmungsweg in Serie aus einer zweiten umgekehrten Quantifikationsschaltung, einer zweiten umgekehrten orthogonalen Transformationsschaltung, einer umgekehrten Schaltung zur Wiederherstellung der Verflechtung der Zwischenzeilen, einem zweiten Addierer, einem zweiten Bildspeicher und einer zweiten Bewegungsausgleichsschaltung besteht, deren Ausgang ebenfalls den zweiten Eingang des besagten zweiten Addierers bildet, wobei der Ausgang des besagten zweiten Vorbestimmungswegs mit dem des ersten Vorbestimmungsweg verbunden ist, um gemeinsam zum negativen Eingang eines Subtrahierers zurückgeleitet zu werden, der sich am Kopf der beiden Kodierwege befindet, dadurch gekennzeichnet, daß das Unter-Ensemble zur Entscheidung eine Stufe zum Vergleich der Anzahl jeweils aus der Kodierung des ersten und zweiten Kodierwegs kommenden Bits und eine Stufe zur Auswahl der Kodier- und Vorausbestimmungswege entsprechend der geringsten Zahl enthält, wobei die besagte Vergleichsstufe Zähler der Anzahl Bits am Ausgang der Kodierschaltungen und einen Vergleicher dieser beiden Anzahlen Bits enthält und die besagte Auswahlstufe einen Schalter für die Auswahl des Kodierwegs entsprechend der der beiden Anzahlen Bits, die Kleiner ist, und zwei Unterbrecher zur Auswahl des Vorbestimmungswegs enthält, der dem so ausgewählten Kodierweg entspricht.
